# EUROPEAN PATENT SPECIFICATION

(11) **EP 2 797 368 B1**
(45) Date of publication and mention of the grant of the patent: **27.09.2017**
(21) Application number: 13829733.8
(22) Date of filing: 13.08.2013
(51) Int. Cl.: H04W 4/00, H04L 29/08

(54) **METHOD, DEVICE, AND SYSTEM FOR DISCOVERING MACHINE TO MACHINE SERVICE**
VERFAHREN, VORRICHTUNG UND SYSTEM ZUR ERFASSUNG EINES MASCHINE-ZU-MASCHINE-DIENSTES
PROCÉDÉ, DISPOSITIF ET SYSTÈME DE DÉCOUVERTE D'UN SERVICE DE MACHINE À MACHINE

(30) Priority: 13.08.2012 CN 201210286544
(43) Date of publication of application: 29.10.2014
(73) Proprietor: Huawei Device Co., Ltd., Longgang District Shenzhen Guangdong 518129 (CN)
(72) Inventor: ZHANG, Jun, Shenzhen Guangdong 518129 (CN); XUE, Guodong, Shenzhen Guangdong 518129 (CN)
(74) Representative: Goddar, Heinz J.
(86) International application number: PCT/CN2013/081340
(87) International publication number: WO 2014/026587

(56) References cited:
- WO-A1-2011/112683
- CN-A- 102 014 103
- CN-A- 102 104 883
- CN-A- 102 136 933
- CN-A- 102 186 164
- INTERDIGITAL COMMUNICATIONS ET AL: "M2M SCL Discovery Procedures", INTERNET CITATION, 7 March 2011 (2011-03-07), pages 1-9, XP002677108, Retrieved from the Internet: URL:http://docbox.etsi.org/M2M/ [retrieved on 2012-06-01]
- INTERDIGITAL COMMUNICATIONS: "M2M Service Discovery Procedures;M2M(11)0377_M2M_Service_Discove ry_Procedures", ETSI DRAFT; M2M(11)0377_M2M_SERVICE_DISCOVERY_PROCEDUR ES, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SmartM2M, 16 May 2011 (2011-05-16), pages 1-7, XP014207964, [retrieved on 2011-05-16]

## Description

### TECHNICAL FIELD

The present invention relates to the field of network technologies, and in particular, to a method, a device, and a system for discovering a machine to machine service.

### BACKGROUND

Machine to machine (Machine to Machine, M2M for short) communications is a service mode that connects various terminal devices by using a plurality of communications technologies and summarizes the terminal devices on an M2M server to implement terminal device management and service, so that M2M services (M2M services) provided by the M2M server such as fleet management, automatic meter reading, health surveillance, or environmental monitoring may conveniently acquire various information needed from the terminal devices, thereby improving the working efficiency, reducing manpower costs, and bringing more flexibility and novelty

A communications scenario for implementing the M2M service may be: an M2M device (M2M Device) on a terminal side accesses a communications network (such as the Internet or a mobile communications network) by means of an M2M gateway (M2M Gateway) to implement communication with an M2M server (M2M server) that is deployed on the network side and can provide the M2M service, thereby implementing various M2M services.

For example, based on the foregoing communications scenario, an implementation process of an automatic meter reading service in a public services field such as water supply, electricity supply, and natural gas supply may be: a metering device with a sensor such as an electricity meter, a water meter, or a natural gas meter may automatically read data on the metering device on a specified date or within a specified period of time, and transmits the data to a data center of an electric power company, water supply company, or natural gas company by means of a wireless network, and then the data center uniformly applies and processes the received data. In this way, previously complicated and effort-consuming meter reading at a user's home becomes very simple. Not only a large quantity of human resources are saved and a working efficiency is improved, but also an application amount change in the public services field can be accurately acquired, so as to timely adjust supply.

Based on the foregoing communications scenario, an implementation process of a vehicle management service widely applied such industries as a logistic company and retail business may be: a vehicle installed with a sensor may transfer a large amount of useful information such as speed, location, and mileage to a data center of a company by means of the wireless network in real time, so that the company may control a current situation of a fleet in real time according to returned information. In addition, information returned by the vehicle may be further stored and analyzed, so as to be applied for other purposes, such as route planning and vehicle dispatching.

Based on the foregoing communications scenario, an implementation process of an environmental monitoring service mainly applied in an environment-related field may be: environment monitoring instruments distributed in various locations may transfer detected weather conditions, such as temperature, humidity, and pollution level to an environmental protection department by means of the wireless network in real time, so that the environmental protection department may inform the public of the weather conditions timely according to received data and analyze a root cause by using recorded data.

Then, to enable various M2M services to possess resources and capabilities of accessing and using the communications network, the European Telecommunications Standards Institute (European Telecommunications Standards Institute, ETSI for short) TC M2M defines such service capabilities as generic communication capability, application enablement capability, or data storage capability that are possessed by such network entities as the M2M device, M2M gateway, or M2M server as an M2M service capability layer (M2M Service Capabilities Layer, M2M SCL for short). The M2M SCL may specifically be an M2M device service capability layer (M2M Device Service Capabilities Layer, M2M DSCL for short) located in the M2M device, an M2M gateway service capability layer (M2M Gateway Service Capabilities Layer, M2M GSCL for short) located in the M2M gateway, and an M2M network service capability layer (M2M Server Service Capabilities Layer, M2M NSCL for short) located in the M2M server.

An existing standard proposes a method for discovering an M2M service in a case of a same M2M network domain and only one M2M NSCL exists in the M2M network domain. Specifically, the ETSI TS 102 690 proposes that: to implement management on the M2M service by the M2M SCL, the M2M service needs to register with the M2M SCL, that is, the M2M DSCL, M2M GSCL, or M2M NSCL. After accepting an M2M service registration, the M2M SCL stores related M2M service information on the M2M SCL and provides the M2M service to the user. In this way, the user can query and obtain the corresponding M2M service from the M2M NSCL.

Interdigital communciations et al.: "M2M SCL Discovery Procedures", 7 March 2011, pp. 1-9, discloses an automated SCL discovery procedure that can be used when the network address of a requested M2M server is not known. An MSDF client sends a M2M discovery request to a local MSDF server to discover available service capability layers (SCLs) located on M2M devices. The local MSDF server functional response to the SCL application with a list of M2M SCL discovery records. Then the M2M SCL application selects the first SCL in the list.

However, with the development of the M2M communications, a plurality of M2M NSCLs may exist within a same M2M network domain (M2M network domain), and a plurality of M2M network domains may appear. Therefore, different service providers (Service Provider) can choose to register the M2M service in M2M NSCLs in a same M2M domain, or choose to register the M2M service in M2M NSCLs in different M2M domains For these two situations, because the M2M service is registered in a plurality of M2M NSCLs, a solution of discovering a M2M service provided by different M2M NSCLs in the same M2M network domain and a M2M service provided by the M2M NSCLs in different M2M network domains needs to be provided. However, the prior art and the existing standard do not provide a corresponding solution.

### SUMMARY

To address the problem in the prior art, the present invention provides a method for discovering a M2M service according to claim 1 and a device for discovering a M2M service according to claim 10.

According to one aspect, an embodiment of the present invention provides a method for discovering a machine to machine service, and the method includes:
receiving, by a first device, a second device registration request sent by a second device, where the second device registration request carries description information of the second device;
creating, by the first device, a first resource, and storing the description information of the second device;
returning, by the first device a response indicative of a registration success of the second device to the second device, so that the second device sends a machine to machine M2M service registration request to the second device after receiving the response indicative of the registration success of the second device;
receiving, by the first device, the M2M service registration request, where the M2M service registration request carries description information of an M2M service supported by the second device; and
creating, by the first device, a second resource corresponding to the first resource, and storing the description information of the M2M service supported by the second device, so that an M2M service requester discovers the M2M service according to the description information of the second device and the description information of the M2M service supported by the second device.

The description information of the second device includes identification information of the second device, where the identification information includes at least one of: access URI information, a device identifier, and an IP address.

The description information of the second device further includes at least one of a name of the second device and information about an M2M network domain to which the second device belongs.

The description information of the M2M service includes identification information of the M2M service.

The description information of the M2M service further includes at least one of: a name of the M2M service, provider information of the M2M service, a type of the M2M service, service area information of the M2M service, quantity of service users of the M2M service, and a billing standard of the M2M service.

The second device registration request or the M2M service registration request further carries at least one of: address information and identification information of an M2M register machine generic communication RGC capability layer.

According to another aspect, an embodiment of the present invention further provides a device for discovering a machine to machine service, and the device includes a first receiving module, a first resource creating module, a sending module, a second receiving module, and a second resource creating module.

The first receiving module is configured to receive a second device registration request sent by a second device, and the second device registration request carries description information of the second device.

The first resource creating module is configured to create a first resource and store the description information of the second device.

The sending module is configured to return a response indicative of a registration success of the second device to the second device, so that the second device sends a machine to machine M2M service registration request to the second device after receiving the response indicative of the registration success of the second device.

The second receiving module is configured to receive the M2M service registration request, and the M2M service registration request carries description information of an M2M service supported by the second device.

The second resource creating module is configured to create a second resource corresponding to the first resource and store the description information of the M2M service supported by the second device, so that an M2M service requester discovers the M2M service according to the description information of the second device and the description information of the M2M service supported by the second device.

An embodiment in this aspect provides a system for discovering a machine to machine service, and the system includes a first devices and a second device.

The second device is configured to send a second device registration request to the first device, and the second device registration request carries description information of the second device.

The first device is configured to: when receiving the second device registration request, create a first resource, store the description information of the second device, and return a response indicative of a registration success of the second device to the second device.

The second device is further configured to send an M2M service registration request to the first device after receiving the response indicative of the registration success of the second device, where the M2M service registration request carries description information of an M2M service supported by the second device.

The first device is configured to: when receiving the M2M service registration request, create a second resource corresponding to the first resource, and store the description information of the M2M service supported by the second device, so that an M2M service requester discovers the M2M service according to the description information of the second device and the description information of the M2M service supported by the second device.

Moreover, an embodiment of the present invention provides a method for discovering a machine to machine service, and the method includes:
receiving, by a first device, a service query message sent by a machine to machine M2M service requester, where the service query message carries a query criterion;
querying, by the first device and according to the query criterion, description information of a locally stored M2M service to obtain description information of an M2M service that matches the query criterion; and
returning, by the first device at least one of description information of the queried M2M service and description information of the second device that supports the queried M2M service to the M2M service requester, so that the M2M service requester acquires service data of the queried M2M service from the second device or uses the queried M2M service.

The returning, by the first device, at least one of description information of the queried M2M service and description information of the second device that supports the queried M2M service to the M2M service requester includes:
querying, by the first device and according to the description information of the queried M2M service, description information of a locally stored second device that supports the M2M service to obtain the second device that supports the queried M2M service, and then returning the description information of the queried M2M service and the description information of the second device that supports the queried M2M service to the M2M service requester;
alternatively, when the second device that supports the M2M service and the first device are located in a same device, directly returning, by the first device the description information of the queried M2M service to the M2M service requester;
alternatively, returning the description information of the queried M2M service to the M2M service requester, so that the second device sends a second device acquiring request to the first device after receiving the description information of the queried M2M service; receiving the second device acquiring request, where the second device acquiring request is used to request the second device that supports the queried M2M service, and the second device acquiring request carries identification information of the queried M2M service; querying, according to the identification information, description information of a locally stored second device that supports the M2M service to obtain the second device that supports the queried M2M service; and returning the description information of the second device that supports the queried M2M service to the M2M service requester.

The query criterion includes at least one of: a name of an M2M service for which query is requested, an identifier of the M2M service for which query is requested, provider information of the M2M service for which query is requested, a type of the M2M service for which query is requested, service area information of the M2M service for which query is requested, quantity of service users of the M2M service for which query is requested, and a billing standard of the M2M service for which query is requested.

The description information of the M2M service includes identification information of the M2M service.

The description information of the M2M service further includes at least one of: a name of the M2M service, provider information of the M2M service, a type of the M2M service, service area information of the M2M service, quantity of service users of the M2M service, and a billing standard of the M2M service.

The description information of the second device includes identification information of the second device, where the identification information includes at least one of: access URI information, an SCL identifier, and an IP address.

The description information of the second device further includes at least one of: a name of the second device and information about an M2M network domain to which the second device belongs.

The service query message further carries at least one of: address information and identification information of an M2M register machine application enablement RAE capability layer.

The acquiring, by the M2M service requester, service data of the queried M2M service from the second device, or using the queried M2M service includes:
receiving, by the second device, an M2M service data acquiring request sent by the M2M service requester; and
querying, by the second device, a latest contentInstance in a locally stored resource container corresponding to the queried M2M service, and sending the latest contentInstance to the M2M service requester.

The acquiring, by the M2M service requester, service data of the queried M2M service from the second device, or using the queried M2M service includes:
receiving, by the second device, an M2M service data subscription request sent by the M2M service requester, where the M2M service data subscription request carries subscription information;
creating, by the second device, a subscription resource to store the subscription information; and
feeding back, by the second device, an updated contentInstance to the M2M service requester by using a subscription feedback address in the subscription information when the contentInstance in the locally stored resource container corresponding to the queried M2M service is updated.

Before the acquiring, by the M2M service requester, service data of the queried M2M service from the second device, or using the queried M2M service, the method further includes:
receiving, by the second device, a registration request sent by the M2M service requester; and
locally creating, by the second device, a resource corresponding to the M2M service requester.

An embodiment of the present invention provides a device for discovering a machine to machine service. The device includes: a first receiving module, a first querying module, and an information feedback module.

The first receiving module is configured to receive a service query message sent by an M2M service requester, and the service query message carries a query criterion.

The first querying module is configured to query, according to the query criterion, description information of a locally stored M2M service to obtain description information of an M2M service that matches the query criterion.

The information feedback module is configured to return at least one of description information of the queried M2M service and description information of the second device that supports the queried M2M service to the M2M service requester, so that the M2M service requester acquires service data of the queried M2M service from the second device or uses the queried M2M service.

The information feedback module includes:
a first information feedback unit, configured to query, according to the description information of the queried M2M service, the description information of the locally stored second device that supports the M2M service to obtain the second device that supports the queried M2M service, and then return the description information of the queried M2M service and the description information of the second device that supports the queried M2M service to the M2M service requester;
alternatively, a second information feedback unit, configured to: when the second device that supports the M2M service and the first device are located in a same device, directly return the description information of the queried M2M service to the M2M service requester;
alternatively, a third information feedback unit, configured to: return the description information of the queried M2M service to the M2M service requester, so that the second device sends a second device acquiring request to the first device after receiving the description information of the queried M2M service; receive the second device acquiring request, where the second device acquiring request is used to request and obtain the second device that supports the queried M2M service, and the second device acquiring request carries identification information of the queried M2M service; query, according to the identifcation information, description information of a locally stored second device that supports the M2M service to obtain the second device that supports the queried M2M service; and return the description information of the second device that supports the queried M2M service to the M2M service requester.

An embodiment of the present invention provides a system for discovering a machine to machine service. The system includes a machine to machine M2M service requester and a first device.

The M2M service requester is configured to send a service query message to the first device, and the service query message carries a query criterion.

The first device is configured to query, according to the query criterion, description information of a locally stored M2M service to obtain the description information of an M2M service that matches the query criterion, and return at least one of description information of the queried M2M service and description information of a second device that supports the queried M2M service to the M2M service requester, so that the M2M service requester acquires service data of the queried M2M service from the second device or uses the queried M2M service.

The system further includes a second device, where the second device includes:
a first receiving module, configured to receive an M2M service data acquiring request sent by the M2M service requester; and
a first data feedback module, configured to query a latest contentInstance in a locally stored resource container corresponding to the queried M2M service, and send the latest contentInstance to the M2M service requester.

The system further includes a second device, where the second device includes:
a second receiving module, configured to receive an M2M service data subscription request sent by the M2M service requester, and the M2M service data subscription request carries subscription information;
a first resource creating module, configured to create a subscription resource to store the subscription information; and
a second data feedback module, configured to feed back an updated contentInstance to the M2M service requester by using a subscription feedback address in the subscription information when the contentInstance in the locally stored resource container corresponding to the queried M2M service is updated.

The system further includes a second device, where the second device includes:
a third receiving module, configured to receive a registration request sent by the M2M service requester; and
a second resource creating module, configured to locally create a resource corresponding to the M2M service requester.

Beneficial effects achieved in the embodiment of the present invention are as follows: by means of receiving the second device registration request and the M2M service registration request sent by the second device and storing the description information of the second device and the description information of the M2M service supported by the second device, the M2M service requester (an M2M user, an M2M application, or the first device) discovers the M2M service according to the description information of the second device and the description information of the M2M service supported by the second device stored by the first device.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG 1a is a schematic flowchart of a method for discovering a machine to machine service according to Embodiment 1 of the present invention;
FIG. 1b is a schematic flowchart of a method for discovering a machine to machine service according to Embodiment 1 of the present invention;
FIG. 2 is a schematic diagram of an M2M network architecture according to Embodiment 1 of the present invention;
FIG. 3 is a schematic flowchart of a method for discovering a machine to machine service according to Embodiment 1 of the present invention;
FIG. 4 is an M2M RSCL Tree according to Embodiment 1 of the present invention;
FIG. 5 is a schematic flowchart of a method for discovering a machine to machine service according to Embodiment 1 of the present invention;
FIG. 6 is a schematic flowchart of a method for acquiring data information of a queried M2M service according to Embodiment 1 of the present invention;
FIG. 7 is a schematic flowchart of a method for acquiring data information of a queried M2M service according to Embodiment 1 of the present invention;
FIG. 8 is a schematic structural diagram of a device for discovering a machine to machine service according to Embodiment 2 of the present invention;
FIG. 9 is a schematic structural diagram of a device for discovering a machine to machine service according to Embodiment 3 of the present invention;
FIG. 10 is a schematic structural diagram of a system for discovering a machine to machine service according to Embodiment 4 of the present invention;
FIG. 11 is a schematic structural diagram of a device for discovering a machine to machine service according to Embodiment 5 of the present invention;
FIG. 12 is a schematic structural diagram of a device for discovering a machine to machine service according to Embodiment 6 of the present invention;
FIG. 13 is a schematic structural diagram of a device for discovering a machine to machine service according to Embodiment 6 of the present invention;
FIG. 14 is a schematic diagram of a system for discovering a machine to machine service according to Embodiment 7 of the present invention;
FIG. 15 is a schematic diagram of a system for discovering a machine to machine service according to Embodiment 7 of the present invention;
FIG. 16 is a schematic diagram of a system for discovering a machine to machine service according to Embodiment 7 of the present invention; and
FIG. 17 is a schematic diagram of a system for discovering a machine to machine service according to Embodiment 7 of the present invention.

### DESCRIPTION OF EMBODIMENTS

To make the objectives, technical solutions, and advantages of the present invention clearer, the following further describes the embodiments of the present invention in detail with reference to the accompanying drawings.

### Exemplary embodiment 1

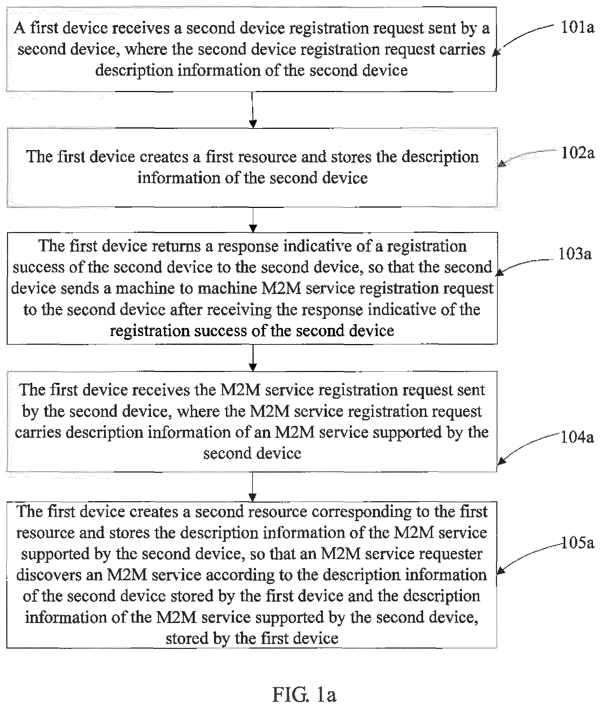

Referring to FIG. 1a, a method for discovering a machine to machine service includes:
Step 101a: A first device receives a second device registration request sent by a second device, where the second device registration request carries description information of the second device.
Step 102a: The first device creates a first resource and stores the description information of the second device.
Step 103a: The first device returns a response indicative of a registration success of the second device to the second device, so that the second device sends a machine to machine M2M service registration request to the second device after receiving the response indicative of the registration success of the second device.
Step 104a: The first device receives the M2M service registration request sent by the second device, where the M2M service registration request carries description information of an M2M service supported by the second device.
Step 105a: The first device creates a second resource corresponding to the first resource and stores the description information of the M2M service supported by the second device, so that an M2M service requester discovers the M2M service according to the description information of the second device stored by the first device and the description information of the M2M service supported by the second device.

A beneficial effect achieved in the embodiment of the present invention is: by means of receiving a second device registration request and an M2M service registration request sent by the second device and storing description information of the second device and description information of an M2M service supported by the second device, an M2M service requester (an M2M user, an M2M application, or a first device) discovers an M2M service according to description information of a second device stored by the first device and the description information of the M2M service supported by the second device.

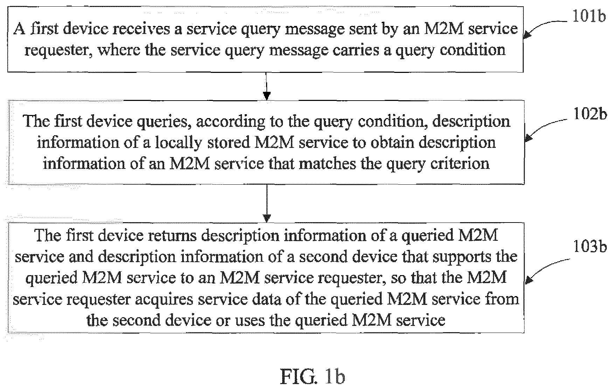

Referring to FIG. 1b, a method for discovering a machine to machine service is provided and includes:
Step 101b: A first device receives a service query message sent by an M2M service requester, where the service query message carries a query criterion.
Step 102b: The first device queries, according to the query criterion, description information of a locally stored M2M service to obtain description information of an M2M service that matches the query criterion.
Step 103b: The first device returns description information of a queried M2M service and description information of a second device that supports the queried M2M service to the M2M service requester, so that the M2M service requester acquires service data of the queried M2M service from the second device or uses the queried M2M service.

A beneficial effect achieved in the embodiment of the present invention is: description information of a locally stored M2M service is queried according to a query criterion in a service query message sent by an M2M service requester, and description information of an M2M service that matches the query criterion is obtained; and then, description information of a queried M2M service and description of a second device that supports the queried M2M service are returned to the M2M service requester, so that the M2M service requester can acquire service data of the queried M2M service from a queried M2M NSCL.

In the embodiment of the present invention, the first device described above may specifically be an M2M registry (M2M Registry), and preferentially, during a specific process of discovering an M2M service, the first device may specifically be a M2M registry service capabilities layer (Registry Service Capabilities Layer, RSCL for short); the second device described above may specifically be an M2M network entity, for example, an M2M device (M2M Device), an M2M gateway (M2M Gateway), or an M2M server (M2M Server), and preferentially, during a process of discovering an M2M service, the second device specifically can be an M2M service capability layer (M2M Service Capability Layer, M2M SCL for short) in the M2M network entity, where the M2M SCL may specifically be an M2M device service capability layer (M2M Device Service Capabilities Layer, M2M DSCL for short) located in the M2M device, an M2M gateway service capability layer (M2M Gateway Service Capabilities Layer, M2M GSCL for short) located in the M2M gateway, or an M2M network service capability layer (M2M Network Service Capability Layer, M2M NSCL for short) located in the M2M server.

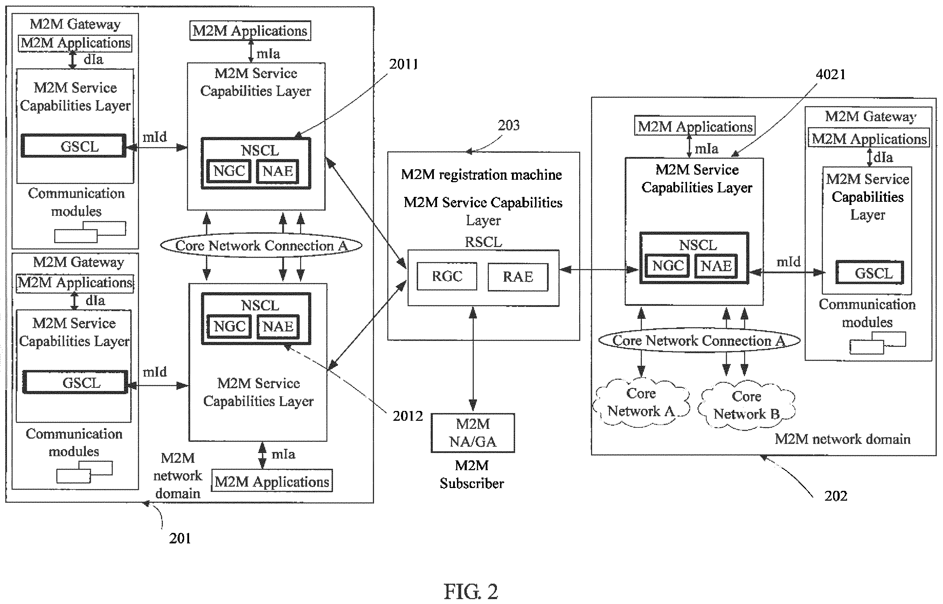

That the M2M RSCL is the first device and the M2M NSCL in the M2M SCL is the second device is used as an example in the embodiment of the present invention to describe the technical solutions illustrated in FIG. 1 and FIG. 2 in detail. However, when the first device and second device specifically are other entities described above, the method for discovering an M2M service is the same as this method, which is not further described herein. A specific method is described as follows:

For an instance of the M2M network architecture corresponding to the embodiment of the present invention, refer to FIG. 2. FIG. 2 includes two different M2M network domains, that is, an M2M network domain 201 and an M2M network domain 202, and an M2M registry (M2M Registry) 203. The M2M network domain 201 includes two different M2M NSCLs, that is, an M2M NSCL 2011 and an M2M NSCL 2012, and the M2M network domain 202 includes one M2M NSCL, that is, an M2M NSCL 2021.

Here, the M2M NSCL is located in the M2M server and includes a network generic communication (Network Generic Communication, NGC for short) capability layer and a network application enablement (Network Application Enablement, NAE) capability layer, where the RGC can provide a information registration service of the M2M service and the RAE can provide a query service of the M2M service.

It should be noted that, before the technical solution provided by the present invention is implemented, the M2M service may be directly registered in the M2M NSCL over an mIa interface and can further be registered with the M2M GSCL on the M2M network over a dIa interface. Afterwards, the registered M2M service in the M2M GSCL is registered with the M2M NSCL over the mIa interface. The M2M NSCL stores registration information of the M2M service and may receive, store, or process M2M service data reported by the M2M device, to provide the M2M service to a user. The dIa interface is an interface between the M2M service and the M2M GSCL and is defined in the ETSI TS 102 921; the mIa interface is an interface between the M2M service and the M2M NSCL and is defined in the ETSI TS 102 921.

In the embodiment of the present invention, an M2M registry 203 supports a M2M SCL defined by the ETSI TC M2M. Herein, a service capability supported by the M2M registry is defined as an M2M registry service capability layer (M2M Registry Service Capabilities Layer, M2M RSCL for short). The M2M RSCL includes a registry generic communication (Registry Generic Communication, RGC for short) capability layer and a registry application enablement (Registry Application Enablement, RAE for short) capability layer, where the RGC provides the information registration service of the M2M service and the RAE provide the query service of the M2M service.

Based on the foregoing network architecture, a general idea of the method for discovering an M2M service provided by the present invention may be: different M2M NSCLs in the same M2M network domain or the M2M NSCLs in different M2M network domains can separately register M2M NSCL information and M2M service information supported by the M2M NSCL with the M2M RSCL. In this way, an M2M application or an M2M user can query the registered M2M NSCLs and M2M service information on the M2M RSCL to discover the M2M service and acquire the corresponding M2M service data.

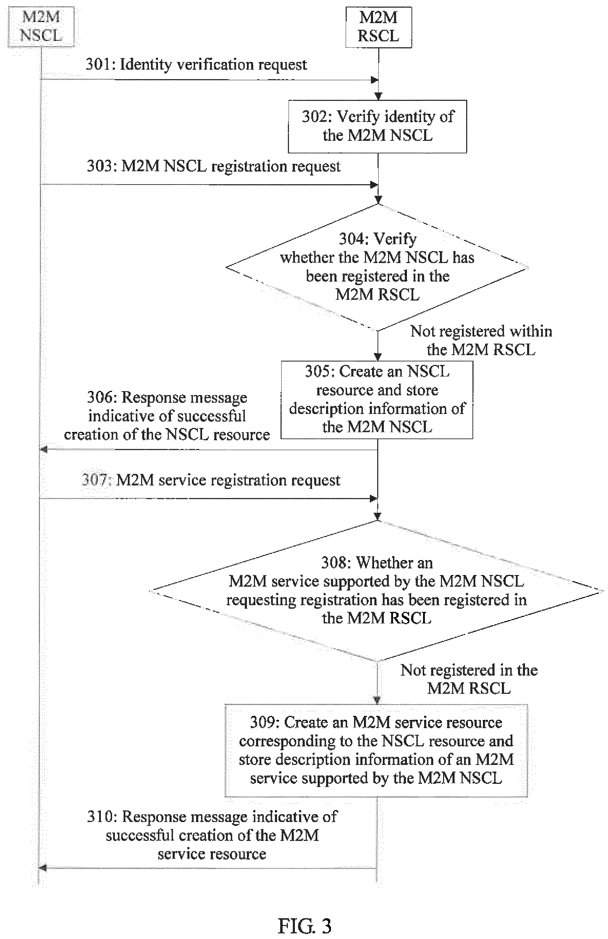

Referring to FIG. 3, the method for discovering an M2M service provided by an embodiment of the present invention may include the following operations:
Step 301: An M2M NSCL sends an identity verification request to an M2M RSCL, where the identify verification request includes identification information of the M2M NSCL.
Step 302: After receiving the identify verification request, the M2M RSCL verifies an identity of the M2M NSCL.
   In specific implementation of the embodiment of the present invention, the M2M NSCL is statically preconfigured with information about an M2M RSCL that allows registration. Herein, the configured information about the M2M NSCL that allows registration includes at least the identification information of the M2M NSCL. After receiving the identify verification request, the M2M RSCL determines whether identification information of a locally stored M2M NSCL includes the identification information of the M2M NSCL. When the identification information of the M2M NSCL is locally stored on the M2M RSCL, it is determined that the identity of the M2M NSCL is authorized, the M2M NSCL is allowed to perform registration, and a verification success message is returned to the M2M NSCL. After receiving the verification success message, the M2M NSCL sends a registration request to the M2M RSCL.
Step 303: The M2M NSCL sends an M2M NSCL registration request to the M2M RSCL, and request creating of a first resource in the M2M RSCL, where the first resource in the embodiment of the present invention is an NSCL resource; that is, requesting creating of context information of the M2M NSCL in the M2M RSCL. Here, a POST (registration) path may be "/<sclBase>/scls/<nscl>".
   In the embodiment of the present invention, a message body of the M2M NSCL registration request carries description information of the M2M NSCL. Here, the description information of the M2M NSCL includes at least identification information of the M2M NSCL (nscl-ID), where the identification information of the M2M NSCL can include at least one of: an access (access) URI (Uniform Resource Identifier, uniform resource identifier), an NSCL identifier, and an IP address; while in specific implementation, in addition to the description information, the description information of the M2M NSCL further includes at least one of: a name of the M2M NSCL and information of a network domain to which the M2M NSCL belongs (M2M NSCL Domain information).
   In addition, a message header of the M2M NSCL registration request further carries at least one of: address information and identification information of the M2M Registry RGC, where an M2M Register RGC corresponding to the address information or the identification information in the M2M RSCL specifically provides a registration service for the M2M NSCL.
   The nscl-ID is used to identify the M2M NSCL and access URI information provides access information of the M2M NSCL, for example, an access path of the M2M NSCL.
Step 304: After receiving the M2M SCL registration request, the M2M RSCL verifies whether the M2M NSCL has been registered in the M2M RSCL;
   If the M2M NSCL has been registered in the M2M RSCL, the M2M RSCL rejects the M2M SCL registration request and returns error information to the M2M NSCL, and the operation ends.
   If the M2M NSCL has not been registered in the M2M RSCL, step 305 is performed.
   Specifically, the verifying whether the M2M NSCL has been registered in the M2M RSCL may include:
   checking whether an NSCL resource identified by the nscl-ID exists in a <sclBase>/scls path; if exists, determining that the M2M NSCL has been registered in the M2M RSCL; otherwise, determining that the M2M NSCL has not been registered in the M2M RSCL.
Step 305: The M2M RSCL receives the M2M SCL registration request, creates the NSCL resource, and stores description information of the M2M NSCL; specifically, creates an NSCL resource sample in the <sclBase>/scls path. In the embodiment of the present invention, the created NSCL resource is identified by the nscl-ID.
Step 306: After successfully creating the NSCL resource identified by the nscl-ID, the M2M RSCL returns a response message indicative of successful creation of the NSCL resource to the M2M NSCL.
Step 307: After receiving the response message indicative of successful creation of the NSCL resource, the M2M NSCL sends an M2M service registration request to the M2M RSCL, requests for registering of information of the M2M service supported by the M2M NSCL with the M2M RSCL. Here, the POST path may specifically be "/<sclBase>/scls/<nscl>/applications".
   In the embodiment of the present invention, a message body of the M2M service registration request carries at least the description information of the M2M service supported by the M2M NSCL. Here, the description information of the M2M service includes at least the identification information of the M2M service (APP-ID). In specific implementation, the description information of the M2M service may further include at least one of the following service description (Service description): a name of the M2M service (APP-name), provider information (Service Provider) of the M2M service, a type (App-Type or vertical service type) of the M2M service, service area information (Location) of the M2M service, and quantity of service users of the M2M service and a billing standard of the M2M service.
   In addition, a message header of the M2M service registration request carries at least one of: address information and identification information of the M2M Registry RGC, where the M2M Register RGC corresponding to the address information or the identification information in the M2M RSCL specifically provides the registration service for the M2M NSCL.
Step 308: After receiving the M2M service registration request, the M2M RSCL verifies whether the M2M service that requests for registration and is supported by the M2M NSCL has been registered with the M2M RSCL;
   If the M2M service has been registered with the M2M RSCL, the M2M RSCL rejects the M2M service registration request and returns an error message to the M2M NSCL.
   If the M2M service is not registered with the M2M RSCL, step 309 is performed.
   Specifically, the verifying whether the M2M service that requests for registration and is supported by the M2M NSCL has been registered with the M2M RSCL may include:
   checking whether an APP-ID of the M2M service that requests for registration and is supported by the M2M NSCL exists in the <sclBase>/scls/<nscl>/applications path; if existed, it is determined that the M2M service that requests for registration and is supported by the M2M NSCL has been registered in the M2M RSCL; otherwise, it is determined that the M2M service that requests for registration and is supported by the M2M NSCL has not been registered in the M2M RSCL.
Step 309: The M2M RSCL receives the M2M service registration request, creates a second resource corresponding to the NSCL resource, where the second resource in the embodiment of the present invention is an M2M service resource, and stores the description information of the M2M service supported by the M2M NSCL, where the M2M service resource specifically may be identified by an M2M service identifier (APP-ID).
   Specifically, the M2M RSCL creates the M2M service resource identified by the APP-ID in the <sclBase>/scls/<nscl>/applications path.
Step 310: After successfully creating the M2M service resource identified by the APP-ID, the M2M RSCL returns a response message indicative of successful creation of the M2M service resource to the M2M NSCL to inform the M2M NSCL that the M2M service supported by the M2M NSCL has been successfully registered with the M2M RSCL.

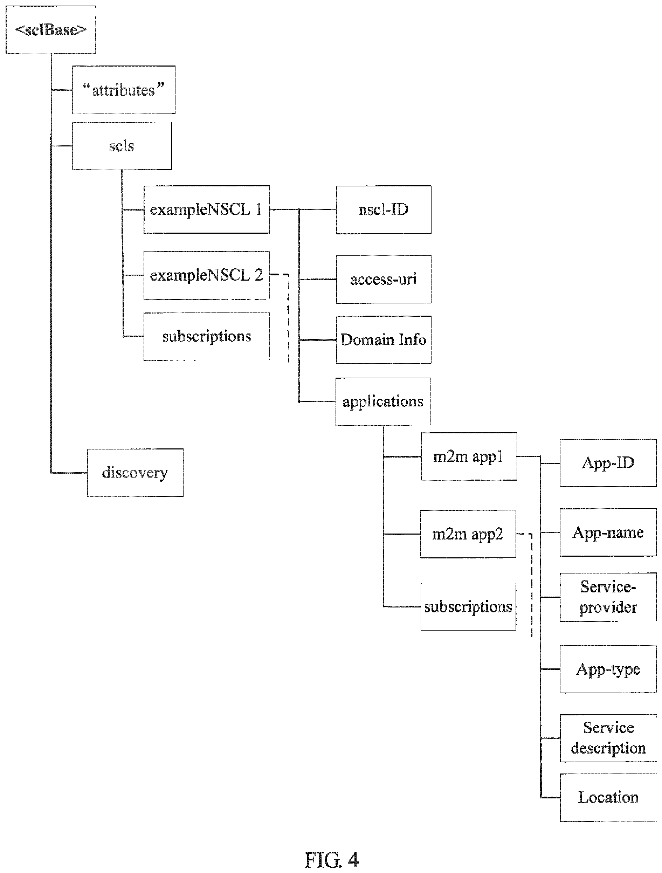

By performing the foregoing steps, the M2M NSCL registered with the M2M RSCL and the M2M service supported by the M2M NSCL can be visually embodied in a tree structure illustrated in FIG. 4 (M2M RSCL Tree).

In this way, after the M2M NSCL and the M2M service supported by the M2M NSCL are registered with the M2M RSCL, an M2M service requester such as an M2M NA (M2M Network Application, M2M Network Application), an M2M SCL, or an M2M user may discover the M2M service according to the M2M NSCL registered with the M2M RSCL and the M2M service supported by the M2M NSCL.

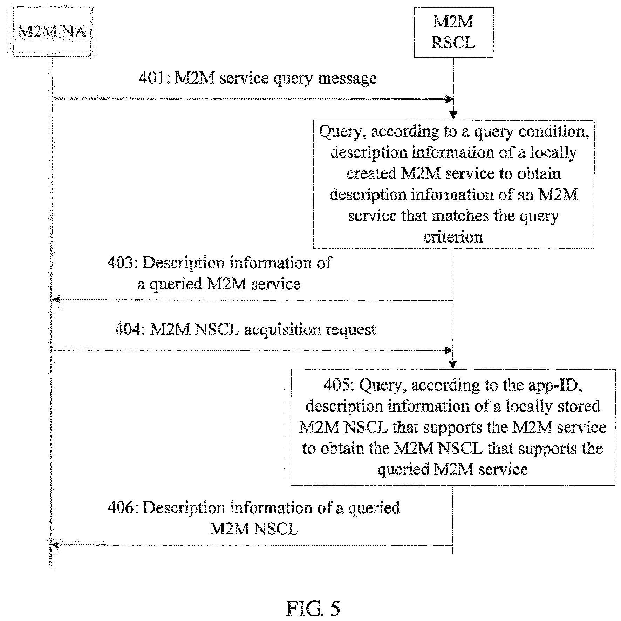

That the M2M application in the M2M service requester discovers the M2M service is used as an example in the following to describe a process of discovering an M2M service in detail. The process of discovering an M2M service by the M2M user or the M2M SCL is the same as this process. Referring to FIG. 5, a method for discovering an M2M service is provided, which may include the following operations:
Step 401: An M2M NA sends an M2M service query message to an M2M RSCL, and requests for querying of a required M2M service. A GET (query) path may specifically be "/<sclBase>/scls/nscl/applications".
   In the embodiment of the present invention, the message body of the M2M service query message carries the query criterion, where the query criterion is used to retrieve the required M2M service and here, the query criterion can include at least one of: a name of the M2M service for which query is requested, an identifier of the M2M service for which query is requested, provider information of the M2M service for which query is requested, a type of the M2M service for which query is requested, service area information of the M2M service for which query is requested, quantity of service users of the M2M service for which query is requested, and a billing standard of the M2M service for which query is requested.
   In addition, a message header of the M2M service query message further carries at least one of: address information and identification information of an M2M Registry RAE, where the M2M Register RAE corresponding to the address information or the identification information in the M2M RSCL specifically provides a query service for the M2M NA.
Step 402: When receiving the M2M service query message, the M2M RSCL queries, according to a query criterion, description information of a locally created M2M service to obtain description information of an M2M service that matches the query criterion.
Step 403: The M2M RSCL returns description information of a queried M2M service to the M2M NA.
   In the embodiment of the present invention, the description information of the M2M service includes at least identification information of the M2M service, where the identification information is used to identify the description information of the M2M service. In specific implementation, the description information of the M2M service can further include at least one of: the name of the M2M service, provider information of the M2M service, the type of the M2M service, service area information of the M2M service, quantity of service users of the M2M service, and the billing standard of the M2M service.
Step 404: After receiving the description information of the queried M2M service, the M2M NA sends an M2M NSCL acquisition request to the M2M RSCL, where the M2M NSCL acquisition request is used to request acquiring of the M2M NSCL that supports the queried M2M service. The M2M NSCL acquisition request carries the identification information of the queried M2M service (app-ID), and the GET (query) path can specifically be "/<sclBase>/scls".
   In the embodiment of the present invention, a message header of the M2M NSCL acquisition request further carries at least one of: the address information and identification information of the M2M Registry RAE, where the M2M Register RAE corresponding to the address information or the identification information in the M2M RSCL provides a query service for the M2M NA.
Step 405: After receiving the M2M NSCL acquisition request, the M2M RSCL queries, according to the app-ID, the description information of the locally stored M2M NSCL that supports the M2M service to obtain the M2M NSCL that supports the queried M2M service.
Step 406: The M2M RSCL returns the description information of the queried M2M NSCL to the M2M NA, so that the M2M NA acquires service data of the queried M2M service from the queried M2M NSCL or uses the queried M2M service.

The description information of the M2M NSCL includes at least the identification information of the queried M2M NSCL, and the identification information of the queried M2M NSCL may include at least one the hollowing: the access URI information, an SCL identifier, and the IP address. In specific implementation, the description information of the M2M NSCL may further include at least one of: an M2M NSCL name, and information about an M2M network domain to which the M2M NSCL belongs.

In specific implementation of the embodiment of the present invention, the M2M RSCL and the M2M NSCL that supports the M2M service described above may be located in the same device, that is, the M2M RSCL and the M2M NSCL that supports the M2M service are co-located. In this situation, the M2M NA has already learnt an address of the M2M NSCL that supports the queried M2M service when sending the service query request to the M2M RSCL. Therefore, implementation of the step 404 to step 406 described above can be omitted.

In addition, in specific implementation of the embodiment of the present invention, after querying and obtaining the corresponding M2M service according to the received query criterion, the M2M RSCL may not need to wait for a next instruction from the M2M NSCL but may directly search for a directly searched M2M NSCL of the M2M service from the description information of the M2M NSCL that is locally stored and supports the M2M service. In this situation, the step 404 to step 406 described above can be substituted by the following operations: the M2M RSCL queries, according to the description information of the queried M2M service, the description information of the M2M NSCL that is locally stored and supports the M2M service to obtain the M2M NSCL that supports the queried M2M service, and returns the description information of the queried M2M service and the description information of the M2M NSCL that supports the queried M2M service to the M2M service requester.

By means of performing the foregoing operations, the M2M service requester can query the required M2M service and the M2M NSCL that supports the queried M2M service in the M2M NSCL registered with the M2M RSCL and the M2M service supported by the M2M NSCL; and after that, the M2M service requester can acquire data information of the queried M2M service and uses the queried M2M service on the M2M NSCL that supports the queried M2M service.

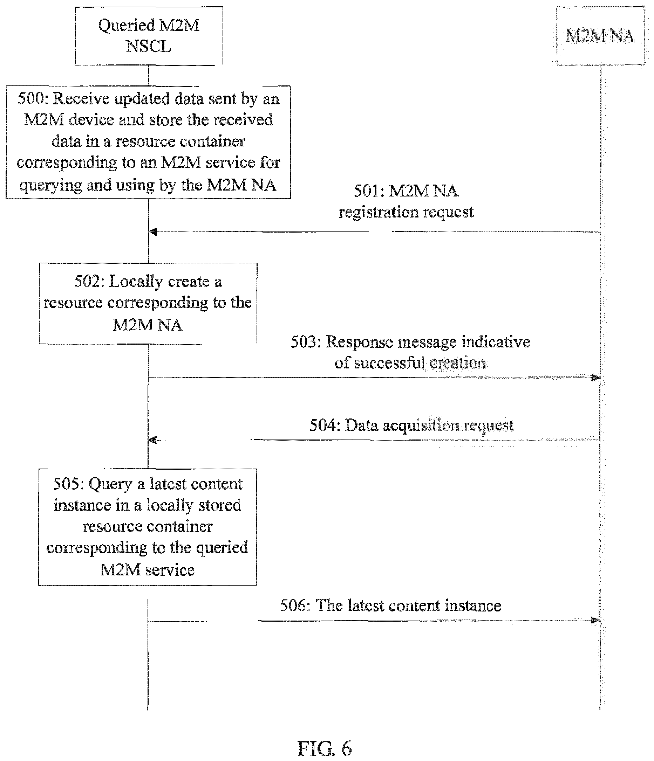

The following describes a method for acquiring the data information of the queried M2M service and using the queried M2M service by using an M2M application as an example. The method for acquiring the data information of the queried M2M service and using the queried M2M service by the M2M user or the M2M SCL is the same as this method. For the specific method, refer to FIG. 6, which includes the following operations:
Step 500: The queried M2M NSCL receives updated data sent by the M2M device and stores the received data in a resource container corresponding to the M2M service for querying and using by the M2M NA.
Step 501: Before acquiring the data information of the queried M2M service, the M2M NA sends an M2M NA registration request to the queried M2M NSCL, to register the queried M2M service for using, where a POST (registration) path is "nscl/applications/m2mNa" and an message header of the M2M NA registration request carries an IP address of an M2M NSCL1NAE.
Step 502: After receiving the M2M NA registration request, the queried M2M NSCL locally creates a resource corresponding to the M2M NA and uses the app-ID to identify the created resource.
Step 503: After successfully creating the resource corresponding to theM2M NA, the queried M2M NSCL returns a response message indicative of successful creation to the M2M NA.
Step 504: The M2M NA sends a data acquisition (contentInstance) request to the queried M2M NSCL, where a GET (acquisition) path is "nscl/applications/m2mApp1/containers/Container/contentInstances" and a request message header carries an IP address of an M2M NSCL NAE.
Step 505: After receiving a contentInstance request from the M2M NA, the queried M2M NSCL queries a latest contentInstance (contentInstance) in a locally stored resource container (container) corresponding to the queried M2M service.
Step 506: The queried M2M NSCL sends the latest contentInstance to the M2M NA.

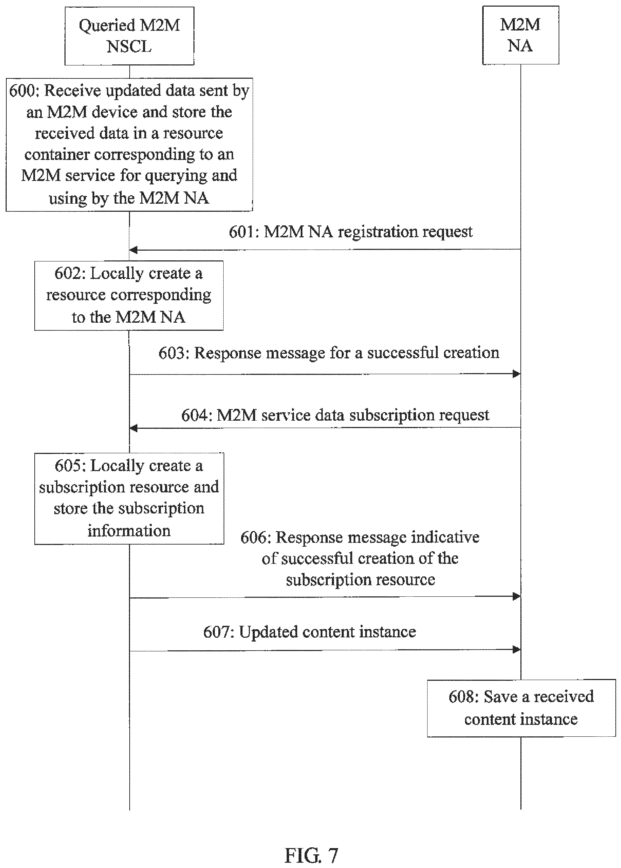

The foregoing is an implementation process of actively acquiring the data information of the queried M2M service by the M2M service requester. In specific implementation, the M2M service requester can further acquire the data information of the queried M2M service in a subscription manner. The following describes the method for acquiring the data information of the queried M2M service by using the M2M application as an example. The method for acquiring the data information of the queried M2M service by the M2M user is the same as this method. For a specific method, refer to FIG. 7, which includes the following operating steps:
For the implementation of step 600 to step 603, refer to the description corresponding to step 500 to step 503 respectively, which is not further described herein.

Step 604: The M2M NA sends an M2M service data subscription request to the queried M2M NSCL, where a POST path is nscl/applications/m2mApp1/containers/Container/contentInstances/subscription.

The M2M service data subscription information at least includes but is not limited to a subscription type (subscriptionType) and a subscription feedback address (callback URI).

Step 605: The queried M2M NSCL locally creates a subscription (Subscription) resource and stores the subscription information.

Step 606: After successfully creating the Subscription resource, the queried M2M NSCL returns a response message indicative of successful creation of the Subscription resource to the M2M NA.

Step 607: The queried M2M NSCL feeds back an updated contentInstance to the M2M application or M2M user by using a subscription feedback address in the subscription information when the contentInstance in the locally stored resource container corresponding to the queried M2M service is updated.

Step 608: The M2M NA saves a received contentInstance and confirms an M2M service data update with the queried M2M NSCL.

Beneficial effects achieved by the technical solutions the present invention are: when a plurality of different M2M NSCLs exist in a same M2M network domain or between different M2M network domains, the M2M NSCL and description information of a M2M service supported by the M2M NSCL can be registered with the M2M RSCL, so that an M2M user or an M2M application discovers a specific M2M service and an M2M NSCL that supports the specific M2M service according to the M2M NSCL and the description information of the M2M service supported by the M2M NSCL registered with the M2M RSCL, and may acquire data of the specific M2M service from the M2M NSCL that supports the specific M2M service.

### Exemplary embodiment 2

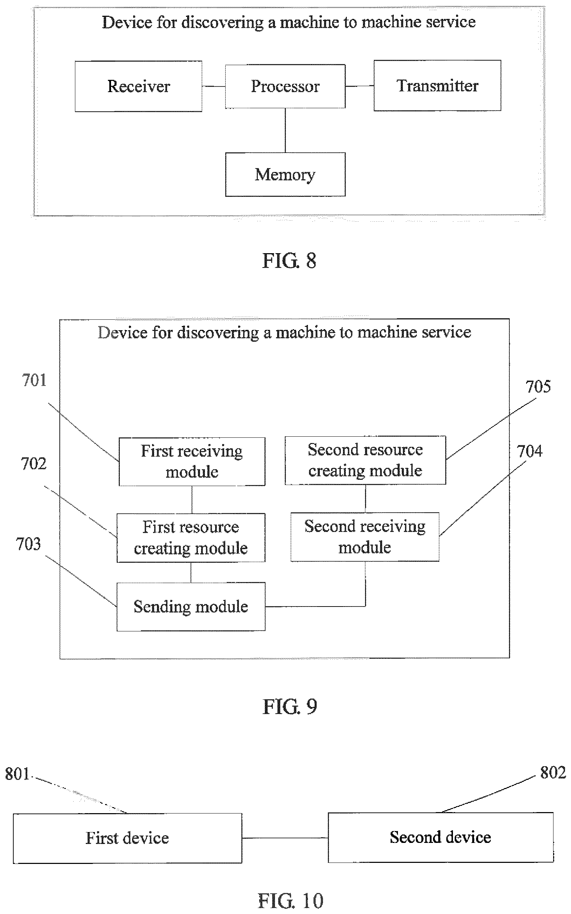

Referring to FIG. 8, an embodiment of the present invention provides a device for discovering a machine to machine service, where the device includes a receiver, a transmitter, a memory, and a processor.

In specific implementation of the embodiment of the present invention, the receiver is configured to receive a second device registration request sent by a second device, where the second device registration request carries description information of the second device;
the processor is configured to create a first resource and store the description information of the second device in the memory;
the transmitter is configured to return a response indicative of a registration success of the second device to the second device, so that the second device sends a machine to machine M2M service registration request to the second device after receiving the response indicative of the registration success of the second device;
accordingly, the receiver is further configured to receive the M2M service registration request, where the M2M service registration request carries description information of an M2M service supported by the second device; and
the processor is further configured to create a second resource corresponding to the first resource and store the description information of the M2M service supported by the second device in the memory, so that an M2M service requester discovers the M2M service according to the description information of the second device and the description information of the M2M service supported by the second device.

A technical solution provided in the embodiment of the present invention may be applicable to any distributed computer system and non-computer scheduling system (such as a fleet management system, an automatic meter reading system, a health surveillance system, or an environmental monitoring system) where the M2M service is running, including a computer, a minicomputer, and a rack server.

Beneficial effects achieved in the embodiment of the present invention are: by means of receiving a second device registration request and an M2M service registration request sent by a second device and storing description information of the second device and description information of an M2M service supported by the second device, an M2M service requester (an M2M user, an M2M application, or a first device) discovers the M2M service according to the description information of the second device and the description information of the M2M service supported by the second device stored by the first device.

### Exemplary embodiment 3

Referring to FIG. 9, an embodiment of the present invention provides a device for discovering a machine to machine service. The device is specifically the same as the first device in Embodiment 1 of the method and may include: a first receiving module 701, a first resource creating module 702, a sending module 703, a second receiving module 704, and a second resource creating module 705.

The first receiving module 701 is configured to receive a second device registration request sent by a second device, where the second device registration request carries description information of the second device.

In the embodiment of the present invention, the description information of the second device may include identification information of the second device, where the identification information includes at least one of: access URI information, a device identifier, and an IP address.

In specific implementation, the description information of the second device further includes at least one of: a name of the second device and information about an M2M network domain to which the second device belongs.

The first resource creating module 702 is configured to create a first resource and store the description information of the second device.

The sending module 703 is configured to return a response indicative of a registration success of the second device to the second device, so that the second device sends a machine to machine M2M service registration request to the second device after receiving the response indicative of the registration success of the second device.

The second receiving module 704 is configured to receive the M2M service registration request, where the M2M service registration request carries description information of an M2M service supported by the second device.

In the embodiment of the present invention, the description information of the M2M service includes at least identification information of the M2M service.

In specific implementation, the description information of the M2M service further includes at least one of: a name of the M2M service, provider information of the M2M service, a type of the M2M service, service area information of the M2M service, quantity of service users of the M2M service, and a billing standard of the M2M service.

The second resource creating module 705 is configured to create a second resource corresponding to the first resource and store the description information of the M2M service supported by the second device, so that an M2M service requester discovers the M2M service according to the description information of the second device and the description information of the M2M service supported by the second device.

Beneficial effects achieved in the embodiment of the present invention are: by means of receiving a second device registration request and an M2M service registration request sent by a second device and storing description information of the second device and description information of an M2M service supported by the second device, an M2M service requester (an M2M user, an M2M application, or a first device) discovers an M2M service according to the description information of the second device and the description information of the M2M service supported by the second device stored by the first device.

### Exemplary embodiment 4

Referring to FIG. 10, an embodiment of the present invention provides a system for discovering a machine to machine service, including a first device 801 and a second device 802.

The second device 802 is configured to send a second device registration request to the first device 801, where the second device registration request carries description information of the second device 802.

The first device 801 is configured to create a first resource when receiving the second device registration request, store the description information of the second device 802, and return a response indicative of a registration success of the second device to the second device 802.

The second device 802 is further configured to send an M2M service registration request to the first device 801 after receiving the response indicative of the registration success of the second device, where the M2M service registration request carries description information of an M2M service supported by the second device 802.

The first device 801 is configured to: when receiving the M2M service registration request, create a second resource corresponding to the first resource, and store the description information of the M2M service supported by the second device 802, so that an M2M service requester discovers the M2M service according to the description information of the second device 802 and the description information of the M2M service supported by the second device 802.

For details about a structure of the first device 801, refer to the structure of the device in Embodiment 3 of the present invention, which is not further described herein.

Beneficial effects achieved in the embodiment of the present invention are: by means of receiving a second device registration request and an M2M service registration request sent by a second device and storing description information of the second device and description information of an M2M service supported by the second device, an M2M service requester (an M2M user, an M2M application, or a first device) discovers an M2M service according to the description information of the second device and the description information of the M2M service supported by the second device stored by the first device.

### Exemplary embodiment 5

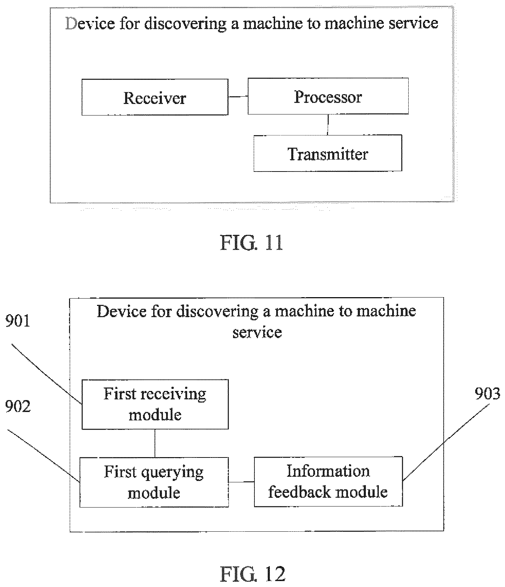

Referring to FIG. 11, an embodiment of the present invention further provides a device for discovering a machine to machine service, where the device may specifically include a receiver, a processor, and a transmitter.

The receiver is configured to receive a service query message sent by an M2M service requester, where the service query message carries a query criterion.

The processor is configured to query, according to the query criterion, description information of a locally stored M2M service to obtain description information of an M2M service that matches the query criterion.

The transmitter is configured to return at least one of description information of a queried M2M service and description information of a second device that supports the queried M2M service to the M2M service requester, so that the M2M service requester acquires service data of the queried M2M service from the second device or uses the queried M2M service.

Beneficial effects achieved in the embodiment of the present invention are: description information of a locally stored M2M service is queried according to a query criterion in a service query message sent by an M2M service requester, and description information of an M2M service that matches the query criterion is obtained; and then, description information of the queried M2M service and description of the second device that supports the queried M2M service are returned to the M2M service requester, so that the M2M service requester can acquire service data of the queried M2M service from a queried M2M NSCL.

### Exemplary embodiment 6

Referring to FIG. 12, an embodiment of the present invention provides a device for discovering a machine to machine service. The device is specifically the same as the first device in Embodiment 1 of the method and may include: a first receiving module 901, a first querying module 902, and an information feedback module 904.

The first receiving module 901 is configured to receive a service query message sent by an M2M service requester, where the service query message carries a query criterion.

In the embodiment of the present invention, the query criterion includes at least one of: a name of the M2M service for which query is requested, an identifier of the M2M service for which query is requested, provider information of the M2M service for which query is requested, a type of the M2M service for which query is requested, service area information of the M2M service for which query is requested, quantity of service users of the M2M service for which query is requested, and a billing standard of the M2M service for which query is requested.

The first querying module 902 is configured to query, according to the query criterion, description information of a locally stored M2M service to obtain description information of an M2M service that matches the query criterion.

In the embodiment of the present invention, the description information of the M2M service includes at least identification information of the M2M service. In specific implementation, the description information of the M2M service further includes at least one of: a name of the M2M service, provider information of the M2M service, a type of the M2M service, service area information of the M2M service, quantity of service users of the M2M service, and a billing standard of the M2M service.

The information feedback module 903 is configured to return at least one of description information of a queried M2M service and description information of a second device that supports the queried M2M service to the M2M service requester, so that the M2M service requester acquires service data of the queried M2M service from the second device or uses the queried M2M service.

In the embodiment of the present invention, the description information of the second device includes identification information of the second device, where the identification information includes at least one of: access URI information, an SCL identifier, and an IP address. In specific implementation, the description information of the second device may further include at least one of: a name of the second device, and information about an M2M network domain to which the second device belongs.

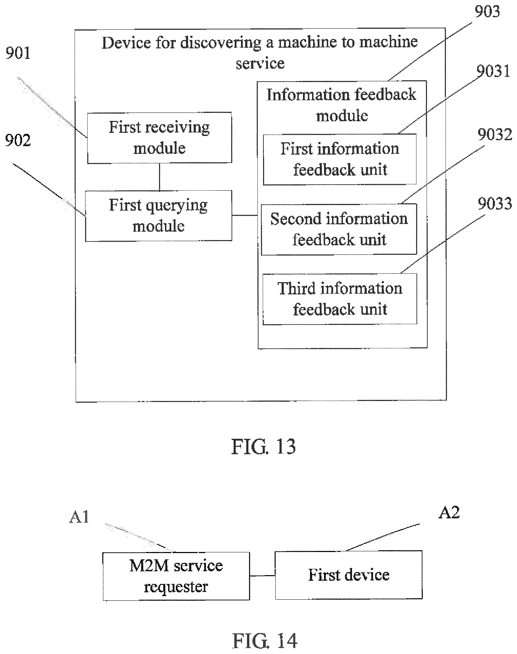

Further, referring to FIG. 13, the information feedback module 903 shown in FIG. 12 in the embodiment of the present invention may include:
a first information feedback unit 9031, configured to query, according to the description information of the queried M2M service, the description information of the locally stored second device that supports the M2M service to obtain the second device that supports the queried M2M service, and then return the description information of the queried M2M service and the description information of the second device that supports the queried M2M service to the M2M service requester;
alternatively, a second information feedback unit 9032, configured to: when the second device that supports the M2M service and the first device are located within the same device, the first device directly returns the description information of the queried M2M service to the M2M service requester;
alternatively, a third information feedback unit 9033, configured to: return the description information of the queried M2M service to the M2M service requester, so that the second device sends a second device acquiring request to the first device after receiving the description information of the queried M2M service; receive the second device acquiring request, where the second device acquiring request is used to acquire the second device that supports the queried M2M service, and the second device acquiring request carries identification information of the queried M2M service; query, according to the identification information, locally stored description information of the second device that supports the M2M service to obtain the second device that supports the queried M2M service; and return the description information of the second device that supports the queried M2M service to the M2M service requester.

Beneficial effects achieved in the embodiment of the present invention are: description information of a locally stored M2M service is queried according to a query criterion in a service query message sent by an M2M service requester, and description information of an M2M service that matches the query criterion is obtained; and then, description information of a queried M2M service and description information of a second device that supports the queried M2M service are returned to the M2M service requester, so that the M2M service requester can acquire service data of the queried M2M service from a queried M2M NSCL.

### Exemplary embodiment 7

Referring to FIG. 14, a system for discovering a machine to machine M2M service is provided, where the system includes a machine to machine M2M service requester A1 and a first device A2, and the M2M service requester A1 may specifically include an M2M application, an M2M SCL, or an M2M user.

The M2M service requester A1 is configured to send a service query message to the first device A2, where the service query message carries a query criterion.

The first device A2 is configured to query, according to the query criterion, description information of a locally stored M2M service to obtain description information of an M2M service that matches the query criterion, and return at least one of: description information of a queried M2M service and description information of a second device that supports the queried M2M service to the M2M service requester A1, so that the M2M service requester A1 acquires service data of the queried M2M service from the second device or uses the queried M2M service.

For details about a structure of the first device A2, refer to the structure of the device in Embodiment 6 of the present invention, which is not further described herein.

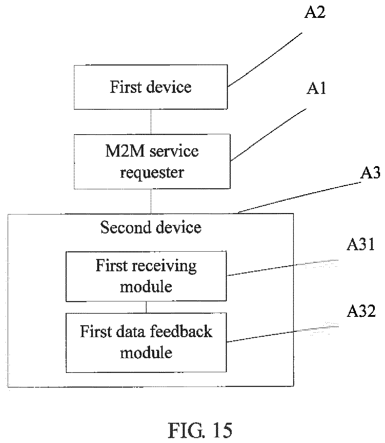

Referring to FIG. 15, the system shown in FIG. 14 in the embodiment of the present invention further includes a second device A3, where the second device A3 includes:
a first receiving module A31, configured to receive an M2M service data acquiring request sent by the M2M service requester A1; and
a first data feedback module A32, configured to query a latest contentInstance in a locally stored resource container corresponding to the queried M2M service, and send a latest contentInstance to the M2M service requester A1.

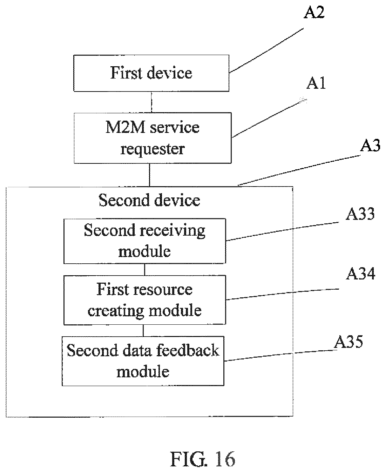

Further, referring to FIG. 16, the system shown in FIG. 14 in the embodiment of the present invention further includes a second device A3, where the second device A3 includes:
a second receiving module A33, configured to receive an M2M service data subscription request sent by the M2M service requester A1, where the M2M service data subscription request carries subscription information;
a first resource creating module A34, configured to create a subscription resource to store the subscription information; and
a second data feedback module A35, configured to feed back an updated contentInstance to the M2M service requester A1 by using a subscription feedback address in the subscription information when the contentInstance in the locally stored resource container corresponding to the queried M2M service is updated.

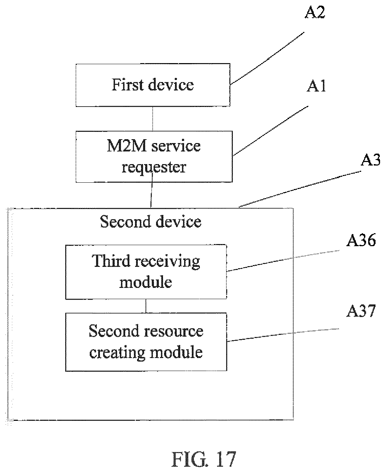

Further, referring to FIG. 17, the system shown in FIG. 14 in the embodiment of the present invention further includes a second device A3, where the second device A3 includes:
a third receiving module A3 6, configured to receive a registration request sent by the M2M service requester; and
a second resource creating module A37, configured to locally create a resource corresponding to the M2M service requester.

Beneficial effects achieved by the technical solutions of the present invention are: description information of a locally stored M2M service is queried according to a query criterion in a service query message sent by an M2M service requester, and description information of an M2M service that matches the query criterion is obtained; and then, description information of a queried M2M service and description of a second device that supports the queried M2M service are returned to the M2M service requester, so that the M2M service requester can acquire service data of the queried M2M service from a queried M2M NSCL.

It should be noted that when the device provided in the foregoing embodiment discovers an M2M service, the division of the above functional modules is used as an example for description. In the actual applications, the above functions may be implemented by different functional modules according to am actual need, that is, different functional modules are divided according to an internal structure of a receiver to complete the above all or some functions. In addition, the device provided in the embodiment is based on the same conception as the method for discovering an M2M service in the foregoing embodiment. The specific implementation of the device is detailed in the method embodiment, and is not repeated herein.

The sequence numbers of the above embodiments of the present invention are used merely for description, and do not represent the preference of the embodiments.

A person of ordinary skill in the art may understand that all or a part of the steps of the embodiments may be implemented by hardware or a program instructing relevant hardware. The program may be stored in a computer readable storage medium. The storage medium may include: a read-only memory, a magnetic disk, or an optical disc.

## Claims

1. A method for discovering a machine to machine, M2M, service, comprising:
receiving (101b), by a first device, a service query message sent by a M2M service requester, wherein the service query message carries a query criterion;
querying (102b), by the first device and according to the query criterion, description information of a locally stored M2M service to obtain description information of an M2M service that matches the query criterion; and
querying, by the first device and according to the description information of the queried M2M service, description information of a locally stored second device that supports the M2M service to obtain description information of a second device that supports the queried M2M service, and then returning the description information of the queried M2M service and the description information of the second device that supports the queried M2M service to the M2M service requester so that the M2M service requester acquires service data of the queried M2M service from the second device or uses the queried M2M service,
wherein the description information of the M2M service comprises identification information of the M2M service, and the description information of the M2M service further comprises at least one of: provider information of the M2M service, service area information of the M2M service, quantity of service users of the M2M service, and a billing standard of the M2M service.

2. The method according to claim 1, further comprises:
when the second device that supports the M2M service and the first device are located in a same device, directly returning, by the first device, the description information of the queried M2M service to the M2M service requester; and/or
returning the description information of the queried M2M service to the M2M service requester, so that the second device sends a second device acquiring request to the first device after receiving the description information of the queried M2M service; receiving the second device acquiring request, wherein the second device acquiring request is used to request the second device that supports the queried M2M service, and the second device acquiring request carries identification information of the queried M2M service; querying, according to the identification information, description information of a locally stored second device that supports the M2M service to obtain the second device that supports the queried M2M service; and returning the description information of the second device that supports the queried M2M service to the M2M service requester.

3. The method according to claim 1, wherein the query criterion comprises at least one of: a name of an M2M service for which query is requested, an identifier of the M2M service for which query is requested, provider information of the M2M service for which query is requested, a type of the M2M service for which query is requested, service area information of the M2M service for which query is requested, quantity of service users of the M2M service for which query is requested, and a billing standard of the M2M service for which query is requested.

4. The method according to claim 1, wherein the description information of the second device comprises at least identification information of the second device, and the identification information comprises at least one of: access URI information, an SCL identifier, and an IP address.

5. The method according to claim 4, wherein the description information of the second device further comprises at least one of: a name of the second device, and information about an M2M network domain to which the second device belongs.

6. The method according to claim 1, wherein the service query message further carries at least one of: address information and identification information of an M2M register machine application enablement RAE capability layer.

7. The method according to claim 1, wherein the acquiring, by the M2M service requester, service data of the queried M2M service from the second device, or using the queried M2M service comprises:
receiving, by the second device, an M2M service data acquiring request sent by the M2M service requester; and
querying, by the second device, a latest contentInstance in a locally stored resource container corresponding to the queried M2M service, and sending the latest contentInstance to the M2M service requester.

8. The method according to claim 1, wherein the acquiring, by the M2M service requester, service data of the queried M2M service from the second device, or using the queried M2M service comprises:
receiving, by the second device, an M2M service data subscription request sent by the M2M service requester, wherein the M2M service data subscription request carries subscription information;
creating, by the second device, a subscription resource to store the subscription information; and
feeding back, by the second device, an updated contentInstance to the M2M service requester by using a subscription feedback address in the subscription information when the contentInstance in the locally stored resource container corresponding to the queried M2M service is updated.

9. The method according to claim 7 or 8, wherein before the acquiring, by the M2M service requester, service data of the queried M2M service from the second device, or using the queried M2M service, the method further comprises:
receiving, by the second device, a registration request sent by the M2M service requester; and
locally creating, by the second device, a resource corresponding to the M2M service requester.

10. A device for discovering a machine to machine, M2M, service, comprising: a first receiving module (901), a first querying module (902), and an information feedback module (903); wherein:
the first receiving module (901) is configured to receive a service query message sent by an M2M service requester, and the service query message carries a query criterion;
the first querying module (902) is configured to query, according to the query criterion, description information of a locally stored M2M service to obtain description information of an M2M service that matches the query criterion; wherein the information feedback module (903) comprises:
a first information feedback unit (9032), configured to query, according to the description information of the queried M2M service, the description information of the locally stored second device that supports the M2M service to obtain description information of a second device that supports the queried M2M service, and then return the description information of the queried M2M service and the description information of the second device that supports the queried M2M service to the M2M service requester so that the M2M service requester acquires service data of the queried M2M service from the second device or uses the queried M2M service,
wherein the description information of the M2M service comprises identification information of the M2M service, and the description information of the M2M service further comprises at least one of: provider information of the M2M service, service area information of the M2M service, quantity of service users of the M2M service, and a billing standard of the M2M service.

11. The device according to claim 12, wherein the information feedback module (903) further comprises:
a second information feedback unit (9032), configured to: when the second device that supports the M2M service and the first device are located in a same device directly return the description information of the queried M2M service to the M2M service requester; and/or
a third information feedback unit (9033), configured to: return the description information of the queried M2M service to the M2M service requester, so that the second device sends a second device acquiring request to the first device after receiving the description information of the queried M2M service; receive the second device acquiring request, wherein the second device acquiring request is used to request and obtain the second device that supports the queried M2M service, and the second device acquiring request carries identification information of the queried M2M service; query, according to the identification information, description information of a locally stored second device that supports the M2M service to obtain the second device that supports the queried M2M service; and return the description information of the second device that supports the queried M2M service to the M2M service requester.

12. A system for discovering a machine to machine service, comprising: a machine to machine M2M service requester and a first device; wherein the first device is a device of claim 10.

13. The system according to claim 12, further comprising the second device, wherein the second device comprises:
a first receiving module, configured to receive an M2M service data acquiring request sent by the M2M service requester; and
a first data feedback module, configured to query a latest contentInstance in a locally stored resource container corresponding to the queried M2M service, and send the latest contentInstance to the M2M service requester.

14. The system according to claim 12, further comprising the second device, wherein the second device comprises:
a second receiving module, configured to receive an M2M service data subscription request sent by the M2M service requester, and the M2M service data subscription request carries subscription information;
a first resource creating module, configured to create a subscription resource to store the subscription information; and
a second data feedback module, configured to feed back an updated contentInstance to the M2M service requester by using a subscription feedback address in the subscription information when a contentInstance in a locally stored resource container corresponding to the queried M2M service is updated.

15. The system according to claim 12, further comprising the second device, wherein the second device comprises:
a third receiving module, configured to receive a registration request sent by the M2M service requester; and
a second resource creating module, configured to locally create a resource corresponding to the M2M service requester.

## Patentansprüche

1. Verfahren zum Auffinden eines Maschine-zu-Maschine-Dienstes bzw. M2M-Dienstes, das die folgenden Schritte umfasst:
Empfangen (101b), durch eine erste Vorrichtung, einer Dienstanfragenachricht, die von einem M2M-Dienst-Anfordernden gesendet wurde, wobei die Dienstanfragenachricht ein Anfragekriterium führt;
Anfragen (102b), durch die erste Vorrichtung und gemäß dem Anfragekriterium, von Beschreibungsinformationen eines lokal gespeicherten M2M-Dienstes, um Beschreibungsinformationen eines M2M-Dienstes zu erhalten, der das Anfragekriterium erfüllt; und
Anfragen, durch die erste Vorrichtung und gemäß den Beschreibungsinformationen des angefragten M2M-Dienstes, von Beschreibungsinformationen einer lokal gespeicherten zweiten Vorrichtung, die den M2M-Dienst unterstützt, um Beschreibungsinformationen einer zweiten Vorrichtung zu erhalten, die den angefragten M2M-Dienst unterstützt, und dann Zurückgeben der Beschreibungsinformationen des angefragten M2M-Dienstes und der Beschreibungsinformationen der zweiten Vorrichtung, die den angefragten M2M-Dienst unterstützt, an den M2M-Dienst-Anfordernden, so dass der M2M-Dienst-Anfordernde Dienstdaten des angefragten M2M-Dienstes von der zweiten Vorrichtung erfasst oder den angefragten M2M-Dienst nutzt,
wobei die Beschreibungsinformationen des M2M-Dienstes Identifikationsinformationen des M2M-Dienstes umfassen und die Beschreibungsinformationen des M2M-Dienstes ferner mindestens eine/eines/einen der Folgenden umfassen: Anbieterinformationen des M2M-Dienstes, Dienstgebietsinformationen des M2M-Dienstes, Anzahl von Dienstnutzern des M2M-Dienstes und ein Rechnungsstellungsstandard des M2M-Dienstes.

2. Verfahren nach Anspruch 1, das ferner die folgenden Schritte umfasst:
wenn sich die zweite Vorrichtung, die den M2M-Dienst unterstützt, und die erste Vorrichtung in ein und derselben Vorrichtung befinden, direktes Zurückgeben, durch die erste Vorrichtung, der Beschreibungsinformationen des angefragten M2M-Dienstes an den M2M-Dienst-Anfragenden; und/oder
Zurückgeben der Beschreibungsinformationen des angefragten M2M-Dienstes an den M2M-Dienst-Anfragenden, so dass die zweite Vorrichtung eine Zweite-Vorrichtung-Erfassungsanforderung an die erste Vorrichtung sendet, nachdem die Beschreibungsinformationen des angeforderten M2M-Dienstes empfangen wurden; Empfangen der Zweite-Vorrichtung-Erfassungsanforderung, wobei die Zweite-Vorrichtung-Erfassungsanforderung verwendet wird zum Anfordern der zweiten Vorrichtung, die den angefragten M2M-Dienst unterstützt, und die Zweite-Vorrichtung-Erfassungsanforderung Identifikationsinformationen des angefragten M2M-Dienstes führt; Anfragen, gemäß den Identifikationsinformationen, von Beschreibungsinformationen einer lokal gespeicherten zweiten Vorrichtung, die den M2M-Dienst unterstützt, um die zweite Vorrichtung, die den angefragten M2M-Dienst unterstützt, zu erhalten; und Zurückgeben der Beschreibungsinformationen der zweiten Vorrichtung, die den angefragten M2M-Dienst unterstützt, an den M2M-Dienst-Anfragenden.

3. Verfahren nach Anspruch 1, wobei das Anfragekriterium mindestens eine/eines/einen der Folgenden umfasst: einen Namen eines M2M-Dienstes, für den die Anfrage angefordert wird, eine Kennung des M2M-Dienstes, für den die Anfrage angefordert wird, Anbieterinformationen des M2M-Dienstes, für den die Anfrage angefordert wird, eine Art des M2M-Dienstes, für den die Anfrage angefordert wird, Dienstgebietsinformationen des M2M-Dienstes, für den die Anfrage angefordert wird, Anzahl von Dienstnutzern des M2M-Dienstes, für den die Anfrage angefordert wird, und ein Rechnungsstellungsstandard des M2M-Dienstes, für den die Anfrage angefordert wird.

4. Verfahren nach Anspruch 1, wobei die Beschreibungsinformationen der zweiten Vorrichtung mindestens Identifikationsinformationen der zweiten Vorrichtung umfassen und die Identifikationsinformationen URI-Zugangsinformationen und/oder eine SCL-Kennung und/oder eine IP-Adresse umfassen.

5. Verfahren nach Anspruch 4, wobei die Beschreibungsinformationen der zweiten Vorrichtung ferner einen Namen der zweiten Vorrichtung und/oder Informationen über eine M2M-Netzwerkdomäne, der die zweite Vorrichtung angehört, umfassen.

6. Verfahren nach Anspruch 1, wobei die Dienstanfragenachricht ferner Adressinformationen und/oder Identifikationsinformationen einer M2M-Registermaschineanwendungsfreigabe-Fähigkeitsschicht bzw. M2M-RAE-Fähigkeitsschicht führt.

7. Verfahren nach Anspruch 1, wobei das Erfassen, durch den M2M-DienstAnfordernden, von Dienstdaten des angefragten M2M-Dienstes von der zweiten Vorrichtung oder das Verwenden des angefragten M2M-Dienstes die folgenden Schritte umfasst:
Empfangen, durch die zweite Vorrichtung, einer M2M-Dienstdatenerfassungsanforderung, die von dem M2M-Dienst-Anfordernden gesendet wurde; und
Anfragen, durch die zweite Vorrichtung, einer letzten InhaltsInstanz in einem lokal gespeicherten Ressourcenbehälter, die dem angefragten M2M-Dienst entspricht, und Senden der letzten InhaltsInstanz an den M2M-Dienst-Anfordernden.

8. Verfahren nach Anspruch 1, wobei das Erfassen, durch den M2M-DienstAnfordernden, von Dienstdaten des angefragten M2M-Dienstes von der zweiten Vorrichtung oder Verwenden des angefragten M2M-Dienstes die folgenden Schritte umfasst:
Empfangen, durch die zweite Vorrichtung, einer M2M-Dienstdatenabonnementanforderung, die von dem M2M-Dienst-Anfordernden gesendet wurde, wobei die M2M-Dienstdatenabonnementanforderung Abonnementinformationen führt;
Erstellen, durch die zweite Vorrichtung, einer Abonnementressource zum Speichern der Abonnementinformationen; und
Rückmelden, durch die zweite Vorrichtung, einer aktualisierten InhaltsInstanz an den M2M-Dienst-Anfordernden durch Verwenden einer Abonnementrückmeldeadresse in den Abonnementinformationen, wenn die InhaltsInstanz in dem lokal gespeicherten Ressourcenbehälter, die dem angefragten M2M-Dienst entspricht, aktualisiert ist.

9. Verfahren nach Anspruch 7 oder 8, wobei das Verfahren, vor dem Erfassen, durch den M2M-Dienst-Anfordernden, von Dienstdaten des angefragten M2M-Dienstes von der zweiten Vorrichtung oder Verwenden des angefragten M2M-Dienstes, ferner die folgenden Schritte umfasst:
Empfangen, durch die zweite Vorrichtung, einer Registrationsanforderung, die von dem M2M-Dienst-Anfordernden gesendet wurde; und
lokales Erstellen, durch die zweite Vorrichtung, einer Ressource, die dem M2M-Dienst-Anfordernden entspricht.

10. Vorrichtung zum Auffinden eines Maschine-zu-Maschine-Dienstes bzw. M2M-Dienstes, umfassend: ein erstes Empfangsmodul (901), ein erstes Anfragemodul (902) und ein Informationsrückmeldemodul (903), wobei:
das erste Empfangsmodul (901) ausgelegt ist zum Empfangen einer Dienstanfragenachricht, die von einem M2M-Dienst-Anfordernden gesendet wurde, und die Dienstanfragenachricht ein Anfragekriterium führt;
das erste Anfragemodul (902) ausgelegt ist zum Anfragen gemäß dem Anfragekriterium von Beschreibungsinformationen eines lokal gespeicherten M2M-Dienstes, um Beschreibungsinformationen eines M2M-Dienstes zu erhalten, der das Anfragekriterium erfüllt;
wobei das Informationsrückmeldemodul (903) Folgendes umfasst:
eine erste Informationsrückmeldeeinheit (9032), die ausgelegt ist zum Anfragen gemäß den Beschreibungsinformationen des angefragten M2M-Dienstes der Beschreibungsinformationen der lokal gespeicherten zweiten Vorrichtung, die den M2M-Dienst unterstützt, um Beschreibungsinformationen einer zweiten Vorrichtung zu erhalten, die den angefragten M2M-Dienst unterstützt, und dann Zurückgeben der Beschreibungsinformationen des angefragten M2M-Dienstes und der Beschreibungsinformationen der zweiten Vorrichtung, die den angefragten M2M-Dienst unterstützt, an den M2M-Dienst-Anfordernden, so dass der M2M-Dienst-Anfordernde Dienstdaten des angefragten M2M-Dienstes von der zweiten Vorrichtung erfasst oder den angefragten M2M-Dienst nutzt,
wobei die Beschreibungsinformationen des M2M-Dienstes Identifikationsinformationen des M2M-Dienstes umfassen und die Beschreibungsinformationen des M2M-Dienstes ferner mindestens eine/eines/einen der Folgenden umfassen: Anbieterinformationen des M2M-Dienstes, Dienstgebietsinformationen des M2M-Dienstes, Anzahl von Dienstnutzern des M2M-Dienstes und ein Rechnungsstellungsstandard des M2M-Dienstes.

11. Vorrichtung nach Anspruch 12, wobei das Informationsrückmeldemodul (903) ferner Folgendes umfasst:
eine zweite Informationsrückmeldeeinheit (9032), die ausgelegt ist zum: wenn sich die zweite Vorrichtung, die den M2M-Dienst unterstützt, und die erste Vorrichtung in ein und derselben Vorrichtung befinden, direkten Zurückgeben der Beschreibungsinformationen des angefragten M2M-Dienstes an den M2M-Dienst-Anfragenden; und/oder
eine dritte Informationsrückmeldeeinheit (9033), die ausgelegt ist zum: Zurückgeben der Beschreibungsinformationen des angefragten M2M-Dienstes an den M2M-Dienst-Anfragenden, so dass die zweite Vorrichtung eine Zweite-Vorrichtung-Erfassungsanforderung an die erste Vorrichtung sendet, nachdem die Beschreibungsinformationen des angeforderten M2M-Dienstes empfangen wurden; Empfangen der Zweite-Vorrichtung-Erfassungsanforderung, wobei die Zweite-Vorrichtung-Erfassungsanforderung verwendet wird zum Anfordern und Erhalten der zweiten Vorrichtung, die den angefragten M2M-Dienst unterstützt, und die Zweite-Vorrichtung-Erfassungsanforderung Identifikationsinformationen des angefragten M2M-Dienstes führt; Anfragen, gemäß den Identifikationsinformationen, von Beschreibungsinformationen einer lokal gespeicherten zweiten Vorrichtung, die den M2M-Dienst unterstützt, um die zweite Vorrichtung, die den angefragten M2M-Dienst unterstützt, zu erhalten; und Zurückgeben der Beschreibungsinformationen der zweiten Vorrichtung, die den angefragten M2M-Dienst unterstützt, an den M2M-Dienst-Anfragenden.

12. System zum Auffinden eines Maschine-zu-Maschine-Dienstes, das Folgendes umfasst: einen Maschine-zu-Maschine-Dienstanfordernden bzw. M2M-DienstAnfordernden und eine erste Vorrichtung, wobei die erste Vorrichtung eine Vorrichtung nach Anspruch 10 ist.

13. System nach Anspruch 12, das ferner die zweite Vorrichtung umfasst, wobei die zweite Vorrichtung Folgendes umfasst:
ein erstes Empfangsmodul, das ausgelegt ist zum Empfangen einer M2M-Dienstdatenerfassungsanforderung, die von dem M2M-Dienst-Anfordernden gesendet wurde; und
ein erstes Datenrückmeldemodul, das ausgelegt ist zum Anfragen einer letzten InhaltsInstanz in einem lokal gespeicherten Ressourcenbehälter, die dem angefragten M2M-Dienst entspricht, und Senden der letzten InhaltsInstanz an den M2M-DienstAnfordernden.

14. System nach Anspruch 12, das ferner die zweite Vorrichtung umfasst, wobei die zweite Vorrichtung Folgendes umfasst:
ein zweites Empfangsmodul, das ausgelegt ist zum Empfangen einer M2M-Dienstdatenabonnementanforderung, die von dem M2M-Dienst-Anfordernden gesendet wurde, und wobei die M2M-Dienstdatenabonnementanforderung Abonnementinformationen führt;
ein erstes Ressourcenerstellungsmodul, das ausgelegt ist zum Erstellen einer Abonnementressource zum Speichern der Abonnementinformationen; und
ein zweites Datenrückmeldemodul, das ausgelegt ist zum Rückmelden einer aktualisierten InhaltsInstanz an den M2M-Dienst-Anfordernden durch Verwenden einer Abonnementrückmeldeadresse in den Abonnementinformationen, wenn die InhaltsInstanz in einem lokal gespeicherten Ressourcenbehälter, die dem angefragten M2M-Dienst entspricht, aktualisiert ist.

15. System nach Anspruch 12, das ferner die zweite Vorrichtung umfasst, wobei die zweite Vorrichtung Folgendes umfasst:
ein drittes Empfangsmodul, das ausgelegt ist zum Empfangen einer Registrationsanforderung, die von dem M2M-Dienst-Anfordernden gesendet wurde; und
ein zweites Ressourcenerstellungsmodul, das ausgelegt ist zum lokalen Erstellen einer Ressource, die dem M2M-Dienst-Anfordernden entspricht.

## Revendications

1. Procédé pour découvrir un service de machine à machine (M2M), consistant à :
recevoir (101b), au moyen d'un premier dispositif, un message de demande de service envoyé par un demandeur de service M2M, dans lequel le message de demande de service comporte un critère de demande ;
demander (102b), au moyen du premier dispositif et en fonction du critère de demande, des informations de description d'un service M2M stocké localement afin d'obtenir des informations de description d'un service M2M qui correspondent au critère de demande ; et
demander, au moyen du premier dispositif et en fonction des informations de description du service M2M demandé, des informations de description d'un second dispositif stocké localement qui prend en charge le service M2M, afin d'obtenir des informations de description d'un second dispositif qui prend en charge le service M2M demandé et, ensuite, renvoyer les informations de description du service M2M demandé ainsi que les informations de description du second dispositif qui prend en charge le service M2M demandé au demandeur de service M2M de telle sorte que le demandeur de service M2M acquière des données de service du service M2M demandé du second dispositif ou utilise le service M2M demandé,
dans lequel les informations de description du service M2M comprennent des informations d'identification du service M2M et les informations de description du service M2M comprennent en outre : des informations de fournisseur du service M2M et/ou des informations de zone de service du service M2M et/ou une quantité d'utilisateurs de service du service M2M et/ou une norme de facturation du service M2M.

2. Procédé selon la revendication 1, consistant en outre :
lorsque le second dispositif qui prend en charge le service M2M et le premier dispositif sont situés dans un même dispositif, à renvoyer directement, au moyen du premier dispositif, les informations de description du service M2M demandé au demandeur de service M2M ; et/ou
à renvoyer les informations de description du service M2M demandé au demandeur de service M2M de telle sorte que le second dispositif envoie une demande d'acquisition du second dispositif au premier dispositif après réception des informations de description du service M2M demandé ; à recevoir la demande d'acquisition du second dispositif, dans lequel la demande d'acquisition du second dispositif est utilisée pour demander le second dispositif qui prend en charge le service M2M demandé, et la demande d'acquisition du second dispositif comporte des informations d'identification du service M2M demandé ; à demander, en fonction des informations d'identification, des informations de description d'un second dispositif stocké localement qui prend en charge le service M2M afin d'obtenir le second dispositif qui prend en charge le service M2M demandé ; et à renvoyer les informations de description du second dispositif qui prend en charge le service M2M demandé au demandeur de service M2M.

3. Procédé selon la revendication 1, dans lequel le critère de demande comprend : un nom d'un service M2M pour lequel une demande est formulée et/ou un identifiant du service M2M pour lequel une demande est formulée et/ou des informations de fournisseur du service M2M pour lequel une demande est formulée et/ou un type du service M2M pour lequel une demande est formulée et/ou des informations de zone de service du service M2M pour lequel une demande est formulée et/ou une quantité d'utilisateurs de service du service M2M pour lequel une demande est formulée et/ou une norme de facturation du service M2M pour lequel une demande est formulée.

4. Procédé selon la revendication 1, dans lequel les informations de description du second dispositif comprennent au moins des informations de description du second dispositif et les informations d'identification comprennent : des informations d'identifiant URI d'accès et/ou un identifiant SCL et/ou une adresse IP.

5. Procédé selon la revendication 4, dans lequel les informations de description du second dispositif comprennent en outre : un nom du second dispositif et/ou des informations concernant un domaine de réseau M2M auquel le second dispositif appartient.

6. Procédé selon la revendication 1, dans lequel le message de demande de service comporte en outre : des informations d'adresse et/ou des informations d'identification d'une couche de capacité d'activation d'application de machine à registres (RAE) M2M.

7. Procédé selon la revendication 1, dans lequel l'acquisition, au moyen du demandeur de service M2M, de données de service du service M2M demandé en provenance du second dispositif ou l'utilisation du service M2M demandé consiste :
à recevoir, au moyen du second dispositif, une demande d'acquisition de données de service M2M envoyée par le demandeur de service M2M ; et
à demander, au moyen du second dispositif, une dernière instance de contenu dans un conteneur de ressources stocké localement correspondant au service M2M demandé et à envoyer la dernière instance de contenu au demandeur de service M2M.

8. Procédé selon la revendication 1, dans lequel l'acquisition, au moyen du demandeur de service M2M, de données de service du service M2M demandé en provenance du second dispositif ou l'utilisation du service M2M demandé consiste :
à recevoir, au moyen du second dispositif, une demande d'abonnement de données de service M2M envoyée par le demandeur de service M2M, dans lequel la demande d'abonnement de données de service M2M comporte des informations d'abonnement ;
à créer, au moyen du second dispositif, une ressource d'abonnement pour stocker les informations d'abonnement ; et
à renvoyer, au moyen du second dispositif, une instance de contenu mise à jour au demandeur de service M2M en utilisant une adresse de renvoi d'abonnement dans les informations d'abonnement lorsque l'instance de contenu dans le conteneur de ressources stocké localement correspondant au service M2M demandé est mise à jour.

9. Procédé selon la revendication 7 ou 8, dans lequel, avant l'acquisition, au moyen du demandeur de service M2M, de données de service du service M2M demandé en provenance du second dispositif ou l'utilisation du service M2M demandé, le procédé consiste à :
recevoir, au moyen du second dispositif, une demande d'enregistrement envoyée par le demandeur de service M2M ; et
créer localement, au moyen du second dispositif, une ressource correspondant au demandeur de service M2M.

10. Dispositif pour découvrir un service de machine à machine (M2M), comprenant : un premier module de réception (901), un premier module de demande (902) et un module de renvoi d'informations (903) ; dans lequel :
le premier module de réception (901) est configuré pour recevoir un message de demande de service envoyé par un demandeur de service M2M et le message de demande de service comporte un critère de demande ;
le premier module de demande (902) est configuré pour demander, en fonction du critère de demande, des informations de description d'un service M2M stocké localement afin d'obtenir des informations de description d'un service M2M qui correspondent au critère de demande ;
dans lequel le module de renvoi d'informations (903) comprend :
une première unité de renvoi d'informations (9032), configurée pour demander, en fonction des informations de description du service M2M demandé, les informations de description du second dispositif stocké localement qui prend en charge le service M2M, afin d'obtenir des informations de description d'un second dispositif qui prend en charge le service M2M demandé et renvoyer, ensuite, les informations de description du service M2M demandé ainsi que les informations de description du second dispositif qui prend en charge le service M2M demandé au demandeur de service M2M de telle sorte que le demandeur de service M2M acquière des données de service du service M2M demandé du second dispositif ou utilise le service M2M demandé,
dans lequel les informations de description du service M2M comprennent des informations d'identification du service M2M et les informations de description du service M2M comprennent en outre : des informations de fournisseur du service M2M et/ou des informations de zone de service du service M2M et/ou une quantité d'utilisateurs de service du service M2M et/ou une norme de facturation du service M2M.

11. Dispositif selon la revendication 12, dans lequel le module de renvoi d'informations (903) comprend en outre :
une deuxième unité de renvoi d'informations (9032), configurée : lorsque le second dispositif qui prend en charge le service M2M et le premier dispositif sont situés dans un même dispositif, pour renvoyer directement les informations de description du service M2M demandé au demandeur de service M2M ; et/ou une troisième unité de renvoi d'informations (9033), configurée : pour renvoyer les informations de description du service M2M demandé au demandeur de service M2M de telle sorte que le second dispositif envoie une demande d'acquisition du second dispositif au premier dispositif après réception des informations de description du service M2M demandé ; pour recevoir la demande d'acquisition du second dispositif, dans lequel la demande d'acquisition du second dispositif est utilisée pour demander et obtenir le second dispositif qui prend en charge le service M2M demandé, et la demande d'acquisition du second dispositif comporte des informations d'identification du service M2M demandé ; pour demander, en fonction des informations d'identification, des informations de description d'un second dispositif stocké localement qui prend en charge le service M2M afin d'obtenir le second dispositif qui prend en charge le service M2M demandé ; et pour renvoyer les informations de description du second dispositif qui prend en charge le service M2M demandé au demandeur de service M2M.

12. Système pour découvrir un service de machine à machine, comprenant : un demandeur de service de machine à machine (M2M) et un premier dispositif ; dans lequel le premier dispositif est un dispositif selon la revendication 10.

13. Système selon la revendication 12, comprenant en outre le second dispositif, dans lequel le second dispositif comprend :
un premier module de réception, configuré pour recevoir une demande d'acquisition de données de service M2M envoyée par le demandeur de service M2M ; et
un premier module de renvoi de données, configuré pour demander une dernière instance de contenu dans un conteneur de ressources stocké localement correspondant au service M2M demandé et envoyer la dernière instance de contenu au demandeur de service M2M.

14. Système selon la revendication 12, comprenant en outre le second dispositif, dans lequel le second dispositif comprend :
un deuxième module de réception, configuré pour recevoir une demande d'abonnement de données de service M2M envoyée par le demandeur de service M2M et la demande d'abonnement de données de service M2M comporte des informations d'abonnement ;
un premier module de création de ressources, configuré pour créer une ressource d'abonnement afin de stocker les informations d'abonnement ; et
un second module de renvoi de données, configuré pour renvoyer une instance de contenu mise à jour au demandeur de service M2M en utilisant une adresse de renvoi d'abonnement dans les informations d'abonnement lorsqu'une instance de contenu dans un conteneur de ressources stocké localement correspondant au service M2M demandé est mise à jour.

15. Système selon la revendication 12, comprenant en outre le second dispositif, dans lequel le second dispositif comprend :
un troisième module de réception, configuré pour recevoir une demande d'abonnement envoyée par le demandeur de service M2M ; et
un second module de création de ressources, configuré pour créer localement une ressource correspondant au demandeur de service M2M.
